# EUROPEAN PATENT APPLICATION

(11) **EP 1 653 230 A1**
(43) Date of publication of application: **03.05.2006**
(21) Application number: 05023535.7
(22) Date of filing: 27.10.2005
(51) Int. Cl.: G01N 27/407

(54) **Solid electrolyte carbon dioxide sensor comprising a glass layer**

(30) Priority: 29.10.2004 JP 2004316177
(71) Applicant: TDK Corporation, Tokyo 103-8272 (JP)
(72) Inventor: Komatsu, Takashi, Chuo-ku Tokyo 103-8272 (JP); Ono, Shizuko, Chuo-ku Tokyo 103-8272 (JP)
(74) Representative: Grünecker, Kinkeldey, Stockmair & Schwanhäusser Anwaltssozietät

(57) **Abstract**

A carbon dioxide sensor (1) has a substrate (10) containing a solid electrolyte. A detecting electrode (20) and a reference electrode (30) are both provided on the same principal surface (12) of the substrate (10). A glass layer (40) is provided on at least part of the surface of the substrate (10) and the reference electrode.The glass layer (40) contains boron, phosphorus, zinc, or titanium.

## Description

### BACKGROUND OF THE INVENTION

### Field of the Invention

The present invention relates to a carbon dioxide sensor.

### Related Background Art

A carbon dioxide sensor generally has a detecting electrode and a reference electrode on a substrate. The substrate here is constituted by a solid electrolyte. The detecting electrode is constituted by a detecting layer formed from a metal compound (used as a gas detecting material) and a metal layer (used as a collector), while the reference electrode is constituted by a metal layer (used as a collector). Each of the metal layers is provided in contact with the solid electrolyte. With a carbon dioxide sensor of this type, when the detecting layer comes into contact with carbon dioxide, a chemical equilibrium reaction occurs between the carbon dioxide and the metal compound in the detecting layer, creating a difference in the concentration of electrically conductive ions between the detecting electrode and the reference electrode on the substrate. The carbon dioxide concentration is measured by sensing the change in electromotive force attributable to this concentration difference.

Carbon dioxide sensors such as the above come in two types: a non-separated type in which the detecting electrode and the reference electrode are provided on the same principal surface of the substrate, and a separated type in which the detecting electrode and the reference electrode are provided on different principal surfaces of the substrate. Because it affords superior productivity, the non-separated type of carbon dioxide sensor has been at the forefront of late. Specifically, with a non-separated type of carbon dioxide sensor, the metal layer used for the collector of the detecting electrode and the metal layer used for the reference electrode can be produced at the same, and there is no need to turn the substrate over, and these and other such advantages simplify the manufacturing process. Naturally, a non-separated type of carbon dioxide sensor not only needs to provide good productivity, but also needs to afford accurate measurement of carbon dioxide concentration. More specifically, it is preferable for the electromotive force of the carbon dioxide sensor to be affected as little as possible by environmental conditions other than carbon dioxide concentration.

Japanese Laid-Open Patent H10-503,022 discloses a carbon dioxide sensor proposed for stabilizing the output of the sensor. With this carbon dioxide sensor, the reference electrode is sealed airtightly by a film made of a material such as high-melting point glass containing zirconium and lead.

### SUMMARY OF THE INVENTION

However, it is difficult for even the carbon dioxide sensor of H10-503,022 to sufficiently suppress fluctuation in the electromotive force of the sensor due to humidity.

The present invention was conceived in light of the above problems, and it is an object thereof to provide a carbon dioxide sensor with which fluctuation in the output due to humidity is sufficiently suppressed.

The carbon dioxide sensor in accordance with the present invention comprises a substrate containing a solid electrolyte and having a surface that includes a principal surface, a detecting electrode and a reference electrode which are provided on the principal surface of the substrate, and a glass layer provided on at least part of the surface of the substrate. The glass layer includes glass that contains boron, phosphorus, zinc, or titanium.

Since the glass layer including the above-mentioned glass is provided on at least part of the surface of the substrate, fluctuation in the output of the carbon dioxide sensor caused by humidity is sufficiently suppressed, which allows the concentration of the carbon dioxide to be accurately measured. The reason why the carbon dioxide sensor of the present invention has this effect is not entirely clear, but the inventors surmise it to be as follows. A glass layer including glass containing the above-mentioned elements has a very solid structure and excellent adhesion, and it is believed that the presence of this glass layer on at least part of the total surface of the substrate sufficiently suppresses the effect of humidity on the portion of the substrate including the solid electrolyte that would otherwise be subject to output fluctuation due to humidity.

If the glass contains an alkali metal, the content of the alkali metal is preferably 15.5 mass % or less, when calculated as an oxide of the alkali metal. The term "alkali metal" as used here refers to the alkali metal elements lithium, sodium, and potassium. With this carbon dioxide sensor, humidity causes less fluctuation in output, sensitivity is enhanced, and the carbon dioxide concentration can be more accurately measured.

Furthermore, it is preferable that the glass layer covers the reference electrode. Covering the reference electrode with the glass layer further reduces the fluctuation in the output caused by humidity, thereby enabling the concentration of the carbon dioxide to be measured more accurately.

It is preferable that the glass layer covers at least a region of the surface of the substrate, which region is placed between the detecting electrode and the reference electrode. Covering the region with the glass layer further reduces the fluctuation in the output caused by humidity, thereby enabling the concentration of the carbon dioxide to be measured more accurately.

According to the present invention, it is possible to provide a carbon dioxide sensor producing an output whose fluctuation caused by humidity is sufficiently suppressed.

The present invention will become more fully understood from the detailed description given hereinbelow and the accompanying drawings which are given by way of illustration only, and thus are not to be considered as limiting the present invention.

### BRIEF DESCRIPTION OF THE DRAWINGS

FIG. 1 is a schematic cross section of a first embodiment of the carbon dioxide sensor of the present invention;
FIG. 2 is a top view of a second embodiment of the carbon dioxide sensor of the present invention;
FIG. 3 is a cross section along the III-III line of the carbon dioxide sensor in FIG. 2;
FIG. 4 is a schematic cross section of a third embodiment of the carbon dioxide sensor of the present invention; and
FIG. 5 is a schematic cross section of a fourth embodiment of the carbon dioxide sensor of the present invention.
FIG. 6 is a table showing compositions of glass layers formed in various working examples.
FIG. 7 is a table showing the sensitivity and the humidity dependence of various working examples and comparative examples.

### DESCRIPTION OF THE PREFERRED EMBODIMENTS

Preferred embodiments of the present invention will now be described in detail with reference to the accompanying drawings. In the description of the drawings, identical reference numerals are used, where possible, to designate identical or equivalent elements that are common to the embodiments, and, in subsequent embodiments, these elements will not be further explained. The dimensional proportions in the drawings do not necessarily coincide with the actual dimensional proportions.

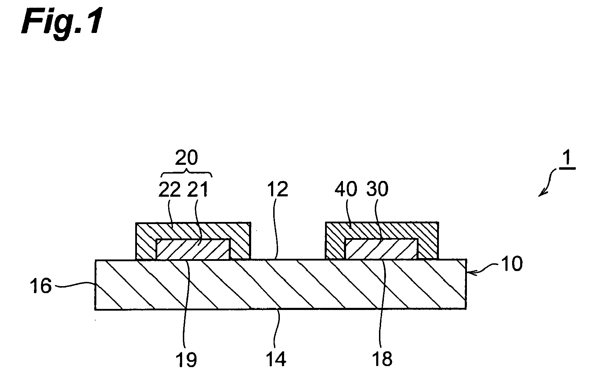

FIG. 1 is a schematic cross section of a first embodiment of the carbon dioxide sensor of the present invention. The carbon dioxide sensor 1 shown in FIG. 1 comprises a substrate 10 that includes a solid electrolyte. The substrate 10 has a first principal surface 12, a second principal surface 14, and lateral sides 16 that connect the first principal surface 12 and second principal surface 14. On the first principal surface 12 of the substrate 10, a detecting electrode 20 is provided to a joining region 19, and a reference electrode 30 is provided to a joining region 18. A glass layer 40 is provided to the surface of the substrate 10 surrounding the reference electrode 30 and on top of the reference electrode 30. The detecting electrode 20 is constituted by a metal layer 21, which serves as a collector in contact with the substrate 10, and a detecting layer 22 provided so as to be in contact with and cover the metal layer 21.

Also provided on the substrate 10 are an electrode pad (not shown) formed overlapping and electrically connected to the metal layer 21 of the detecting electrode 20, and an electrode pad (not shown) formed, overlapping and electrically connected to the reference electrode 30. These electrical pads are connected to a pair of leads of an external potentiometer (not shown).

The glass layer 40 is composed of glass containing boron, phosphorus, zinc, or titanium.

Covering the reference electrode with the glass layer 40 composed of the above-mentioned glass makes it possible to sufficiently suppress fluctuation in the output caused by humidity, thereby enabling the concentration of the carbon dioxide to be measured more accurately. The reason the carbon dioxide sensor 1 has this effect is not entirely clear, but the inventors surmise it to be as follows. A glass layer composed of glass containing the above-mentioned elements has a very solid structure and excellent adhesion, and it is believed that covering the reference electrode with this glass layer sufficiently suppresses the effect of humidity on the portion that would otherwise be subject to output fluctuation due to humidity.

A solid metal ion conductor is an example of the solid electrolyte that constitutes the substrate 10. Examples of metal ion conductors include alkali metal ion conductors and alkaline earth metal ion conductors, but the use of a sodium ion conductor is preferable.

Specific examples of metal ion conductors include NASICONs expressed by Na₁₊ₓZr₂SiₓP₃₋ₓO₁₂ (x = 0 to 3), Na-β" alumina, Na-β alumina, Na-βGa₂O₃, Na-Fe₂O₃, Na₃Zr₂PSi₂P₂O₁₂, Li-β alumina, Li₁₄Zn(CeO₄), Li₅AlO₄, Li_{1.4}Ti_{1.6}In_{0.4}P₃O₁₂, K-β alumina, K_{1.6}Al_{0.8}Ti_{7.2}O₁₆, K₂MgTi₇O₁₆, CaS. However, the actual compositions of the metal ion conductors comprising the substrate 10 may deviate somewhat from their stoichiometric compositions. Of these conductors, NASICONs are preferable, and a particularly favorable NASICON is expressed by the formula Na₃Zr₂Si₂PO₁₂.

In addition to this solid electrolyte, to the extent that ionic conductivity is not impaired, the substrate 10 may include a reinforcing agent, examples of which include aluminum oxide (Al₂O₃), silicon oxide (SiO₂), zirconium oxide (ZrO₂), silicon carbide (SiC), silicon nitride (Si₃Ni₄), and iron oxide (Fe₂O₃), preferably in an amount of about 50 mass % or less.

The thickness of the substrate 10 is about 1 µm to 1 mm, and the surface area of its principal surfaces if about 1 µm² to 200 mm². The shape of the principal surfaces may be rectangular, circular, or otherwise suitably determined according to the application. This substrate 10 may be produced by any commonly used method, such as a solid phase process, sol-gel process, or co-deposition process, but is preferably produced by a solid phase process.

The metal layer 21 that constitutes the detecting electrode 20 is formed from a metal material that is electroconductive enough to function as a collector. Metal materials that can be used favorably to form the metal layer 21 include gold, platinum, silver, rubidium, rhodium, palladium, iridium, nickel, copper, chromium, and alloys of these, for example.

The metal layer 21 usually has a thickness of about 0.01 to 10 µm, and the surface area of its principal surfaces is about 0.1 µm² to 200 mm². The metal layer 21 is preferably porous, so that the carbon dioxide gas will be efficiently dispersed within the detecting electrode 20. The metal layer 21 can be formed, for example, by making a paste-like mixture of a metal powder and applying this mixture by screen printing or another such method, or by stamping or the like. If the detecting layer of the detecting electrode 20 is itself sufficiently conductive, the detecting electrode does not necessarily have to have a metal layer, in which case the detecting electrode may be constituted by just a detecting layer.

The detecting layer 22 is formed from a gas detecting material containing a metal compound such as a metal carbonate, a metal hydrogencarbonate, or a metal oxide. If the detecting layer 22 is made up of particles of a metal compound such as a metal carbonate, a metal hydrogencarbonate, or a metal oxide, then the average particle size is preferably from 0.1 to 100 µm.

Examples of metal carbonates include lithium carbonate (Li₂CO₃), sodium carbonate (Na₂CO₃), potassium carbonate (K₂CO₃), rubidium carbonate (Rb₂CO₃), cesium carbonate (Cs₂CO₃), magnesium carbonate (MgCO₃), calcium carbonate (CaCO₃), strontium carbonate (SrCO₃), barium carbonate (BaCO₃), manganese carbonate (Mn(CO₃)₂, Mn₂(CO₃)₃), iron carbonate (Fe(CO₃)₃, FeCO₃), nickel carbonate (NiCO₃), copper carbonate (CuCO₃), cobalt carbonate (Co₂(CO₃)₃), chromium carbonate (Cr₂(CO₃)₃), zinc carbonate (ZnCO₃), silver carbonate (Ag₂CO₃), cadmium carbonate (CdCO₃), indium carbonate (In₂(CO₃)₃), yttrium carbonate (Y₂(CO₃)₃), lead carbonate (PbCO₃), bismuth carbonate (Bi₂(CO₃)₃), lanthanum carbonate (La₂(CO₃)₃), cerium carbonate (Ce(CO₃)₃), praseodymium carbonate (Pr₆(CO₃)₁₁), neodymium carbonate (Nd₂(CO₃)₃), and dysprosium carbonate (Dy₂(CO₃)₃). These metal carbonates may be used singly or in combinations of two or more types. Of these, it is preferable to use lithium carbonate, sodium carbonate, or potassium carbonate.

Examples of metal hydrogencarbonates include alkali metal hydrogencarbonates such as sodium hydrogencarbonate (NaHCO₃) potassium hydrogencarbonate (KHCO₃), rubidium hydrogencarbonate (RbHCO₃), and cesium hydrogencarbonate (CsHCO₃). These may be used singly or in combinations of two or more types. Of these, it is particularly favorable to use sodium hydrogencarbonate.

It is preferable for the detecting layer to contain at least one type of metal oxide selected from the group consisting of tin oxide (SnO, SnO₂), indium oxide (In₂O₃), cobalt oxide (Co₃O₄), tungsten oxide (WO₃), zinc oxide (ZnO), lead oxide (PbO), copper oxide (CuO), iron oxide (Fe₂O₃, FeO), nickel oxide (NiO), chromium oxide (Cr₂O₃), cadmium oxide (CdO), bismuth oxide (Bi₂O₃), manganese oxide (MnO₂, Mn₂O₃), yttrium oxide (Y₂O₃), antimony oxide (Sb₂O₃), lanthanum oxide (La₂O₃), cerium oxide (CeO₂), praseodymium oxide (Pr₆O₁₁), neodymium oxide (Nd₂O₃), silver oxide (Ag₂O), lithium oxide (Li₂O), sodium oxide (Na₂O), potassium oxide (K₂O), rubidium oxide (Rb₂O), magnesium oxide (MgO), calcium oxide (CaO), strontium oxide (SrO), and barium oxide (BaO). Of these, it is preferable, in terms of being able to stably detect gas at low temperature, to use at least one type of metal oxide selected from the group consisting of tin oxide, indium oxide, cobalt oxide, tungsten oxide, zinc oxide, lead oxide, copper oxide, iron oxide, nickel oxide, chromium oxide, cadmium oxide, and bismuth oxide, and even more preferable to use at least one type selected from the group consisting of tin oxide, indium oxide, zinc oxide, and tungsten oxide. The actual compositions of the metal oxides comprising the detecting layer 22 may deviate somewhat from their stoichiometric compositions.

The thickness of the detecting layer 22 is usually about 0.1 to 100 µm, and this layer can be formed by a conventional method, such as a paste method in which particles of a metal compound are dispersed in a solvent to prepare a paste, this paste is applied so as to be in contact with the metal layer 21 to form a paste layer, and this paste layer is heated to remove the solvent.

The reference electrode 30 usually has a thickness of about 0.1 to 100 µm, and the surface area of its principal surfaces can be about 0.1 µm² to 200 mm². The reference electrode 30 can be formed by the same method and from the same metal materials as those discussed for the metal layer 21 above. The reference electrode 30 may have a through-hole formed in it, or it may be porous, or it may be a flat sheet with no through-holes or voids. If the reference electrode 30 is porous, as with the carbon dioxide sensor 1 shown in FIG. 1, the glass layer 40 preferably covers the entire reference electrode 30, which allows output fluctuation caused by humidity to be more effectively suppressed.

The material of the above-mentioned electrode pads is preferably the same as the material of the metal layer 21.

As discussed above, the glass layer 40 is composed of glass containing boron, phosphorus, zinc, or titanium. Examples of such glass include borosilicate glass, soda glass, and lithium-based crystallized glass. These can be used singly or in combinations of two or more types. Of the above types of glass, the use of a borosilicate glass is preferred.

To reduce the fluctuation in the output of the carbon dioxide sensor caused by humidity, and to increase the sensitivity of the carbon dioxide sensor, it is preferable that the above-mentioned glass does not contain the alkali metal. If the above-mentioned glass contains an alkali metal, the content of the alkali metal is preferably 15.5 mass %, and more preferably 5 mass % or less, when calculated as an oxide. Keeping the amount of alkali metal contained in the glass to 15.5 mass % or less sufficiently improves the sensitivity of the carbon dioxide sensor as well as sufficiently reduces the fluctuation in the output of the carbon dioxide sensor due to humidity. The proportion in which alkali metal is contained in the above-mentioned glass can be found by fluorescent X-ray analysis, inductive coupling plasma spectrometry, or another such method.

The glass layer 40 can be formed by dispersing a powder composed of the above-mentioned glass in a specific solvent, coating the reference electrode 30 and the area around the reference electrode 30 with this resulting paste, drying the paste, and then heating at an appropriate temperature. In this case, the particle size of the glass powder is preferably from 0.1 to 100 µm. If the heating temperature for the formation of the glass layer 40 is higher than the heating temperature for the formation of the detecting layer 22, the formation of the glass layer 40 is preferably performed ahead of the formation of the detecting layer 22, or the glass layer 40 is formed simultaneously with the detecting layer 22.

There are no particular restrictions on the thickness of the glass layer 40, but at least 0.1 µm is preferable. If the glass layer is less than 0.1 µm thick, it will tend to be more difficult to sufficiently suppress output fluctuation due to humidity.

The carbon dioxide sensor of the present invention is not limited to the above embodiment, and various modifications are possible. Another embodiment of the carbon dioxide sensor of the present invention will now be described.

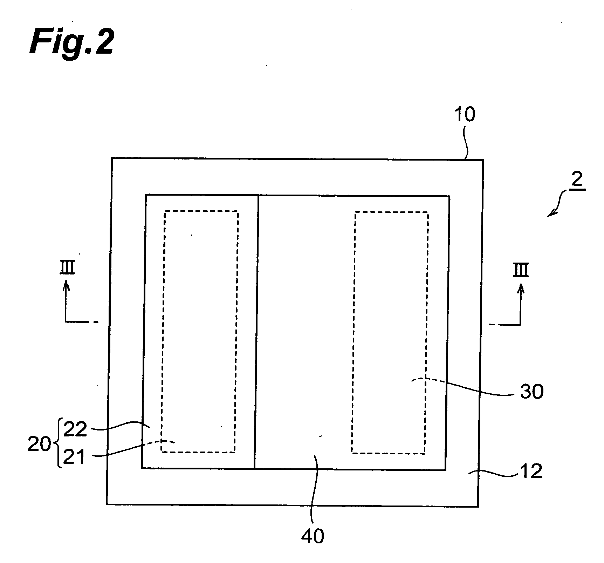

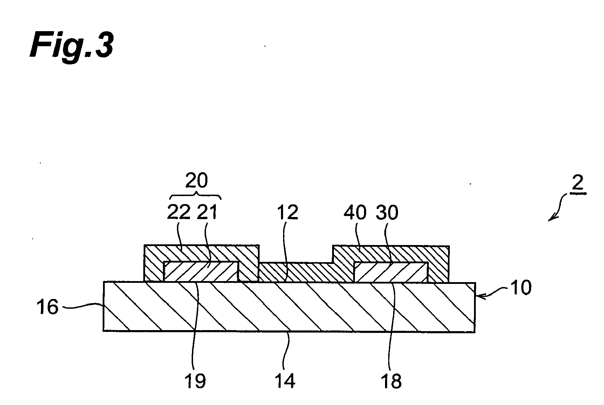

FIG. 2 is a top view illustrating a second embodiment of the carbon dioxide sensor of the present invention. FIG. 3 is a cross section along the III-III line in FIG. 2. The carbon dioxide sensor 2 shown in FIGS. 2 and 3 differs from the carbon dioxide sensor 1 in that out of the first principal surface 12 of the substrate 10, the surface between the reference electrode 30 and the detecting electrode 20 is further covered by the glass layer 40.

Thus having the glass layer 40 cover the surface between the reference electrode 30 and the detecting electrode 20 out of the first principal surface 12 of the substrate further suppresses fluctuation in the output of the carbon dioxide sensor 2 caused by humidity.

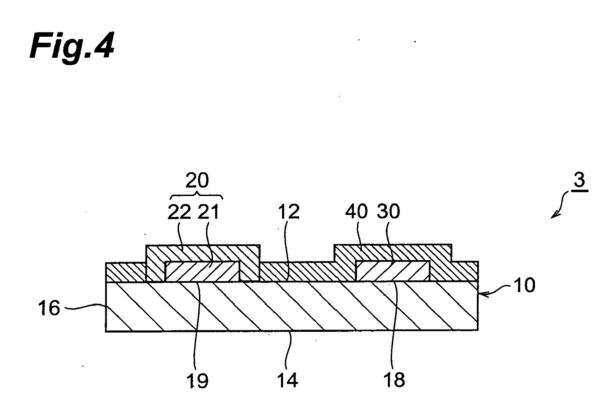

FIG. 4 is a schematic cross section of a third embodiment of the carbon dioxide sensor of the present invention. The carbon dioxide sensor 3 shown in FIG. 4 differs from the carbon dioxide sensor 1 in that out of the first principal surface 12, the surface other than the joining region 19 where the detecting electrode is provided is further covered with the glass layer 40, and the glass layer 40 is provided so that none of the first principal surface 12 is left exposed.

Thus providing the glass layer 40 so that none of the first principal surface 12 of the substrate 10 is left exposed further suppresses fluctuation in the output of the carbon dioxide sensor 3^{[2]} caused by humidity.

With the carbon dioxide sensors 1 to 3 above, the glass layer 40 was provided over the first principal surface 12 of the substrate 10, but the glass layer 40 may instead be provided over the second principal surface 14 and the lateral sides 16 of the substrate. There are no particular restrictions on the constitution of the lateral sides 16 and the second principal surface 14 of the substrate in the carbon dioxide sensors 1 to 3 configured this way, which affords a great deal of freedom in the design of a carbon dioxide sensor. For instance, a heater or the like with a predetermined shape can be provided over the second principal surface 14, and everything sealed airtightly, in which case again fluctuation in the output of the carbon dioxide sensor due to humidity ca be sufficiently suppressed.

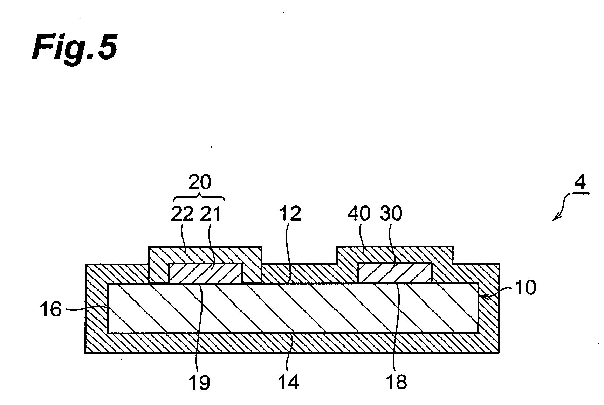

FIG. 5 is a schematic cross section of a fourth embodiment of the carbon dioxide sensor of the present invention. The carbon dioxide sensor 4 shown in FIG. 5 differs from the carbon dioxide sensor 1 in that out of the first principal surface 12, the surface other than the joining region 19 where the detecting electrode is provided, as well as the second principal surface 14 and the lateral sides 16 of the substrate 10, are further covered with the glass layer 40, and the glass layer 40 is provided so that none of the surface of the substrate 10 is left exposed.

Thus providing the glass layer 40 so that none of the substrate 10 is left exposed further suppresses fluctuation in the output of the carbon dioxide sensor 4 caused by humidity.

The present invention will now be described in more specific terms through working examples and comparative examples, but the present invention is not limited to or by these working examples.

### Working Example 1

A carbon dioxide sensor having the same configuration as the carbon dioxide sensor shown in FIG. 1 was produced as follows.

First, a NASICON (specifically, Na₃Zr₂Si₂PO₁₂) powder was prepared by a sol-gel process, and this NASICON powder was used to form a solid electrolyte substrate with a width of 4 mm, a length of 4 mm, and a thickness of 0.5 mm.

Then, gold wires were disposed at two places on one side of the solid electrolyte substrate thus formed, and these were coated with a gold paste and the coating was dried, after which this product was heated for 30 minutes at 850°C in air, which formed two metal layers that served as the detecting electrode collector layer and the reference electrode. These two metal layers were 1 mm apart.

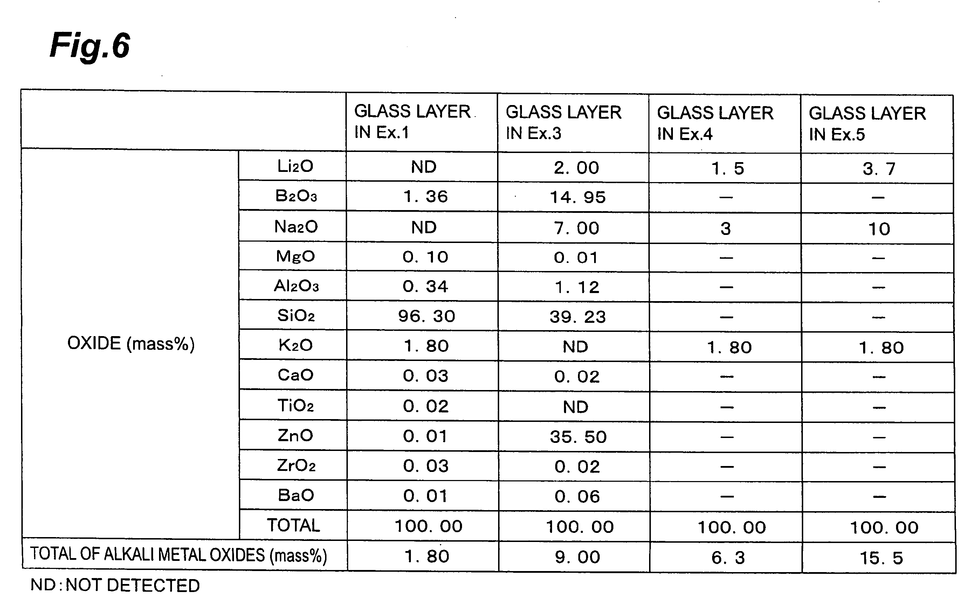

Next, a glass paste was prepared by mixing equal masses of a borosilicate glass powder (trade name GA50, made by Nippon Electric Glass Co., Ltd.) and an α-terpineol solution containing 5 mass % ethyl cellulose. The metal layer that served as the reference electrode was coated with this glass paste and the coating was dried and then heated for 30 minutes at 900°C to form a glass layer. The glass layer thus formed covered all of the reference electrode and the solid electrolyte surrounding the reference electrode. A glass layer formed in this same manner was subjected to inductive coupling plasma spectroscopy. The compositional data thus obtained is shown in FIG. 6.

Next, a lithium carbonate powder and a barium carbonate powder were mixed in a molar ratio of 1:2, and this mixture was melted at 750°C to prepare a compound carbonate. The compound carbonate thus obtained was then pulverized into a powder. This compound carbonate powder was then mixed with an indium oxide powder in a mass ratio of 1:10, and this mixture and an α-terpineol solution containing 5 mass % ethyl cellulose were mixed in equal masses to prepare a paste. The resulting paste was used to coat the metal layer that served as the collector layer of the detecting electrode. Next, this product was heated for 1 hour in air at 600°C to remove the solvent, which formed a detecting electrode composed of a metal layer and a detecting layer on a solid electrolyte substrate, and produced a carbon dioxide sensor.

### Working Example 2

In this example, a carbon dioxide sensor having the same configuration as the carbon dioxide sensor shown in FIG. 4 was produced. Upon production, glass paste was applied on the metal layer, which served as the reference electrode, and on a portion of the principal surface, at the side on which the reference electrode is provided, of the solid electrolyte substrate, except a region of the portion on which the detecting layer was to be formed. Other processes are same as those in Working Example 1. The compositional data of the glass layer thus formed was the same as that for the glass layer formed in Working Example 1.

### Working Example 3

First, a NASICON (specifically, Na₃Zr₂Si₂PO₁₂) powder was prepared by a sol-gel process, and this NASICON powder was used to form a solid electrolyte substrate with a width of 4 mm, a length of 4 mm, and a thickness of 0.5 mm.

Then, gold wires were disposed at two positions on one of the principal surfaces of the solid electrolyte substrate thus formed, and these were coated with a gold paste and the coating was dried, after which this product was heated for 30 minutes at 850°C in air, which formed two metal layers that served as the detecting electrode collector layer and the reference electrode. These two metal layers were 1 mm apart.

Next, a glass paste was prepared by mixing equal masses of a borosilicate glass powder (trade name GA12, made by Nippon Electric Glass Co., Ltd.) and an α-terpineol solution containing 5 mass % ethyl cellulose. The metal layer that served as the reference electrode was coated with this glass paste, and the coating was dried.

Next, a lithium carbonate powder and a barium carbonate powder were mixed in a molar ratio of 1:2, and this mixture was melted at 750°C to prepare a compound carbonate. The compound carbonate thus obtained was then pulverized into a powder. This compound carbonate powder and an α-terpineol solution containing 5 mass % ethyl cellulose were mixed in equal masses to prepare a paste. The resulting paste was used to coat the metal layer that served as the collector layer of the detecting electrode.

Next, an indium oxide powder and an α-terpineol solution containing 5 mass % ethyl cellulose were mixed in equal masses to prepare a paste. The resulting paste was used to coat the metal carbonate layer.

This product was then heated for 1 hour in air at 600°C to form a glass layer on the reference electrode, and form a detecting layer on the collector layer, thereby producing a carbon dioxide sensor having the same configuration as the carbon dioxide sensor shown in FIG. 1. A glass layer formed in this same manner was subjected to inductive coupling plasma spectroscopy. The compositional data thus obtained is shown in FIG. 6.

### Working Example 4

In this example, a carbon dioxide sensor was produced using a borosilicate glass powder obtained by adding Na₂O and Li₂O to a borosilicate glass powder (trade name "GA50") so that, when the glass layer thus formed was subjected to inductive coupling plasma spectroscopy, the Na₂O accounted for 3 mass % and the Li₂O for 1.5 mass %. Other processes are same as those in Working Example 1. The heating in the formation of the glass layer was performed for 30 minutes at 850°C in air. FIG. 6 shows only the values for alkali metal oxides out of the compositional data for the glass layer thus formed.

### Working Example 5

In this example, a carbon dioxide sensor was produced using a borosilicate glass powder obtained by adding Na₂O and Li₂O to a borosilicate glass powder (trade name "GA50") so that, when the glass layer thus formed was subjected to inductive coupling plasma spectroscopy, the Na₂O accounted for 10 mass % and the Li₂O for 3.7 mass %. Other processes are same as those in Working Example 1. The heating in the formation of the glass layer was performed for 30 minutes at 850°C in air. FIG. 1 shows only the values for alkali metal oxides out of the compositional data for the glass layer thus formed.

### Comparative Example 1

A carbon dioxide sensor was produced in the same manner as in Working Example 1, except that no glass paste coating was applied and no glass layer was formed.

### Comparative Example 2

A carbon dioxide sensor was produced in the same manner as in Working Example 3, except that a glass powder whose main components were zirconium oxide and lead oxide, and which contained no boron, phosphorus, zinc, or titanium, was used instead of the borosilicate glass powder (trade name "GA12"). The heating in the formation of the glass layer was performed for 1.5 hours at 510°C in air.

### Evaluation of Carbon Dioxide Sensor

### (Sensitivity of Carbon Dioxide Sensor)

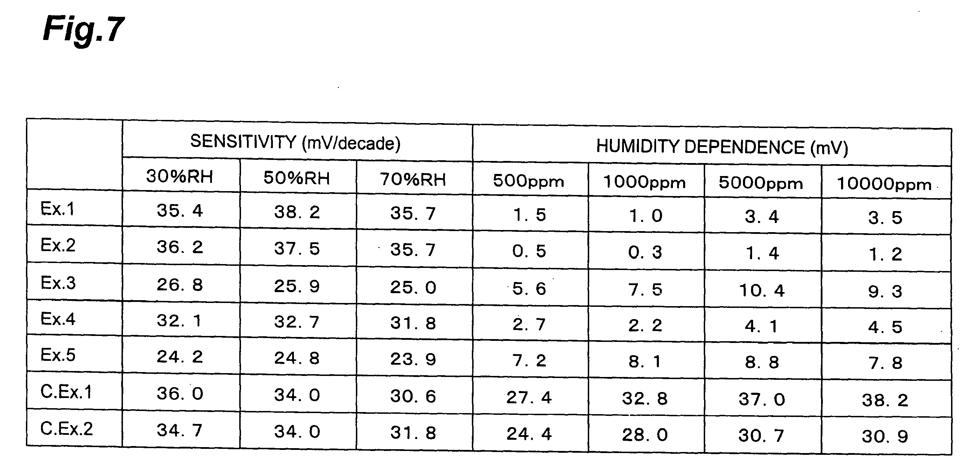

The carbon dioxide sensors obtained in Working Examples 1 to 5 and Comparative Examples 1 and 2 were tested for sensitivity as follows. The output (electromotive force) of each carbon dioxide sensor in an atmosphere with a carbon dioxide concentration of 1000 ppm, room temperature, and relative humidity (RH) of 30% is referred as base value E₀, and the difference between this value and output E₁ when the concentration of the carbon dioxide in the atmosphere was changed to 10,000 ppm, E₁ - E₀, is referred as sensitivity (mV/decade) under these atmosphere conditions. Similarly, the sensitivity was found under atmospheres in which the relative humidity was 50% and 70%. These results are given in FIG. 7.

### (Humidity Dependence of Carbon Dioxide Sensor)

The carbon dioxide sensors obtained in Working Examples 1 to 5 and Comparative Examples 1 and 2 were tested for humidity dependence as follows. The electromotive force (mV) at various carbon dioxide concentrations (500 ppm, 1000 ppm, 5000 ppm, and 10,000 ppm) was measured under atmospheres with a relative humidity (RH) of 30%, 50%, and 70%. For an electromotive force obtained at a given carbon dioxide concentration, the difference (mV) between the maximum and minimum values between the various humidities was referred as humidity dependence of the carbon dioxide sensor. More specifically, the larger is this value, the higher is the humidity dependence of the carbon dioxide sensor, and the greater is the output fluctuation due to humidity. These results are given in FIG. 7.

As shown in FIG. 7, the carbon dioxide sensors of Working Examples 1 to 5 had much less output fluctuation due to humidity at the various carbon dioxide concentrations than those in Comparative Examples 1 and 2. Also, the carbon dioxide sensors of Working Examples 1, 2, and 4, in which glass with an alkali metal content of 5 mass % or less was used, can be seen to have higher sensitivity and less output fluctuation due to humidity than those in Working Examples 3 and 5. Furthermore, it can be seen that the carbon dioxide sensor of Working Example 2, in which a glass layer was provided on the reference electrode and on one of the principal surfaces of the substrate including the surface between the reference electrode and the detecting electrode, had less output fluctuation due to humidity than that in Working Example 1.

Meanwhile, the carbon dioxide sensor of Comparative Example 1, which had no glass layer, and the carbon dioxide sensor of Comparative Example 2, in which the reference electrode was covered by a glass layer formed from a glass powder containing no boron, phosphorus, zinc, or titanium, did not have sufficient suppression of output fluctuation due to humidity.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A carbon dioxide sensor, comprising:
a substrate containing a solid electrolyte; the substrate having a surface that includes a principal surface;
a detecting electrode provided on the principal surface of the substrate;
a reference electrode provided on the principal surface of the substrate; and
a glass layer provided on at least part of the surface of the substrate, the glass layer including glass that contains boron, phosphorus, zinc, or titanium.

2. A carbon dioxide sensor according to claim 1, wherein the glass contains an alkali metal at a content, of 15.5 mass % or less, when calculated as an oxide of the alkali metal.

3. A carbon dioxide sensor according to claim 1 or 2, wherein the glass layer covers the reference electrode.

4. A carbon dioxide sensor according to any of claims 1 - 3, wherein the glass layer covers at least a region of the surface of the substrate, the region being placed between the detecting electrode and the reference electrode.
